# EUROPEAN PATENT APPLICATION

(11) **EP 2 712 938 A1**
(43) Date of publication of application: **02.04.2014**
(21) Application number: 12786183.9
(22) Date of filing: 10.05.2012
(51) Int. Cl.: C21C 5/32, C21C 5/46, C21C 1/00, C21C 7/072

(54) **LANCE FOR TOP INJECTION IN METALLURGICAL VESSELS AND METHOD FOR THE PRODUCTION OF SAID LANCE**

(30) Priority: 17.05.2011 BR PI1102228
(71) Applicant: Magnesita Refratários S/A, CEP-32210-000 Contagem, MG (BR)
(72) Inventor: ALVES FREIRE, Rubens, Belo Horizonte, MG (BR); CRUZ ARANTES CAMPOS, Leonardo, Belo Horizonte, MG (BR); LIMA DE SIQUEIRA, Jorge, CEP-35160-272 Ipatinga, MG (BR); GUARNIER DOMINICANO, Victor, CEP-86050-130 Londrina, PR (BR)
(74) Representative: Cohausz & Florack
(86) International application number: PCT/BR2012/000131
(87) International publication number: WO 2012/155225

(57) **Abstract**

The present invention relates to a lance for top injection in metallurgical vessels, which is used essentially for the refining process of pig iron and steel production. Lance for top injection in metallurgical vessels, which is used essentially for the refining process of pig iron and steel production. The lance (11) has at least one inner tube (13) and a cover of refractory concrete (16), the external profile of the cover of refractory concrete (16) being polygonal. Also described is a method for the production of said lance (11).

## Description

The present invention relates to a lance for top injection in metallurgical vessels, essentially used for the refining process of pig iron and steel production. Said specification is also about a method for the production of an injection lance.

### Description of the prior Art

Refractory blowing lance are used for the refining of pig iron or steel baths in metallurgical processes, and are inserted vertically from top to bottom or in a defined angle with the vertical in the metallurgical vessel. Such lances usually consist of an inner pipe for the injection of gas enriched or not by a combination of powders, and by a refractory concrete coating around the pipe. The lances for injection in metallurgical vessels can also present a cooling jacket comprising an intermediate metal pipe for feeding cooling fluid and an outer pipe for the return of the cooling fluid, besides the outer layer of refractory coating. Generally, the inner pipe of the lance presents a cylindrical shape, but there are exceptions as the ones showed in JP8157928, where the shape of the internal pipe of the lance may be for example polygonal, hexagonal or triangular. In any case, the shape of the outer refractory concrete layer is always cylindrical.

Said cylindrical outer shape of the refractory concrete layer represents, nevertheless, a difficulty in the production process of the lance, imposing limitations that contribute to the reduction of its useful life and in-crease of the performance instability thereof.

The performance, that is to say, the useful life of the refractory concrete, and, consequently, of the injection lances, depend a lot on their physical properties as porosity and density, which, on the other hand, are closely linked to the quality of shaping, for instance, the time of vibration and filler, which should be enough for the correct accommodation of the material.

For the refractory concrete application step to the inner pipe of an injection lance a mold is placed around said refractory, which is then filled. The opening for the filling of the concrete mass should be the smallest possible, in order to avoid thickness loss in the filling point. Such opening should, on the other hand, be large enough to allow the concrete filling in a reason-able time and, thus preventing segregation of the material and metal fibers, which present very diverse granulometry, comprising the formulation of the product. It should be noted that, due to the worse quality of the concrete in the feeding zone, caused by a difficulty of filling in a narrow opening, it can occur a higher incidence of cracks and chipping.

### Brief description of the invention

In order to solve the problem of the prior art, which is to fill a mold with refractory concrete, which involves an inner pipe made of metal in an injection lance, in a reasonable time and, thus reducing the necessary vibration time of the mold cutting the time of manpower, to reduce the tendency of phase separation with segregation of fibers and grains within the concrete mass and, at last, to improve its granulometric distribution, the feeding opening should be increased without compromising the thickness of the refractory coating in the filler zone. Such commitment is solved by giving to the outer surface of the layer of refractory concrete in the injection lance a polygonal section.

The opening for feeding the refractory concrete mass in the mold of an injection lance with the outer surface in a polygonal shape is done on one side of the polygon. Thus, it is obtained a larger width opening, which allows a faster filling, resulting in a considerable improvement in relation to the prior art.

### Brief Description of the Drawings

The present invention will be hereinafter further described based on an embodiment represented in the drawings. The figures show:
Figure 1 - it is a section view of the feeding section of a mold of an injection lance of the prior art;
Figure 2 - it is a top view of the feeding section of a mold of an injection lance of the prior art;
Figure 3 - it is a top view of the feeding section of a mold of an injection lance of the present invention;
Figure 4 - it is a top view of the feeding section of the mold of an injection lance of the present invention;
Figure 5 - it is a top view of the feeding section of the mold of an injection lance of the present invention completely filled;
Figure 6 - it is a perspective view of the injection lance of the present invention; and
Figure 7 - it is a section view of the injection lance of the present invention.

### Detailed description of the figures

As already mentioned, the present invention discloses as an improvement, in relation to the prior art, a polygonal cross-section in the outer layer of refractory concrete for injection lances, aiming thereby reducing the difference of physical properties, as porosity and density, in such zones of the refractory material, due to the greater homogeneity obtained by the reduction of time and vibration intensity in the production process. Said shorter time of filling and vibration reduces the segregation tendency of smaller and lighter particles for the upper part of the piece, that is to say, the feeding point. Such gains are due to the fact that the polygonal shape offers greater thickness of the filling zone of the mold if compared to the cylindrical shape of the prior art. Besides the gains in the productive process, the greater homogeneity of the refractory matrix reduces the probability of accelerated wear of the closing zone of the mold, contributing thus for the increasing of the useful life of the injection lance.

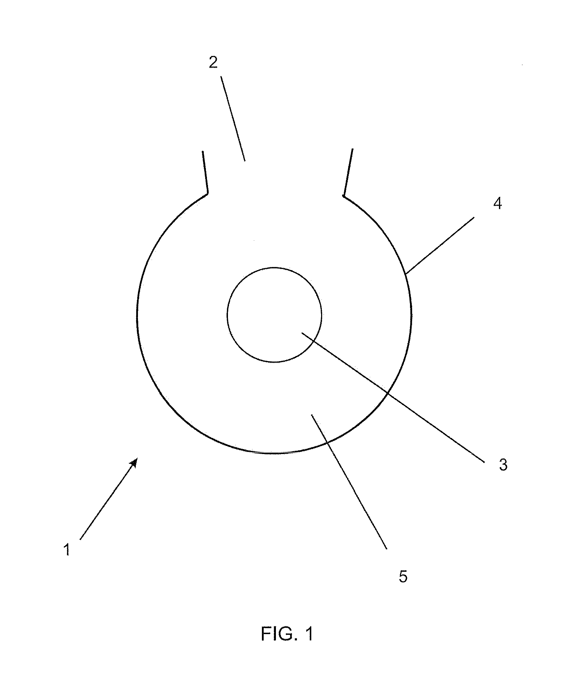

As can be seen from figure 1, which presents a sectional view of the feeding section of a mold of an injection lance 1 of the prior art, in order to have a feeding opening 2 of the mold 4 is necessary the loss of a circular arc section of refractory material, which entails a decrease in thickness of refractory material 5 in this point. For the refractory material loss 5 and the correspondent loss of coating thickness until the inner pipe 3 to be as smaller as possible, the feeding opening 2 should be as narrowest as possible. With a narrow feeding opening 2 the filling time is necessarily long, which results in segregation of the material and fibers which composes the refractory concrete. As a result, the apparent porosity of the refractory in the base and in the middle of the molded piece is smaller than in the top. Such heterogeneous distribution of porosity is harmful for the useful life of the injection lance 1.

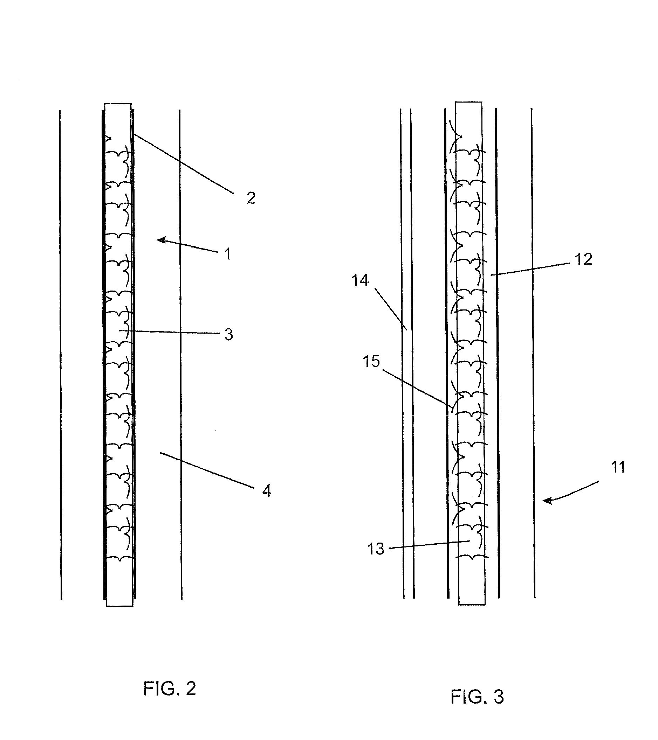

In Figure 2 it is shown a top view of the feeding opening 2 of a mold 4 of an injection lance 1 of the prior art. Through the feeding opening it can be seen in the inner pipe 3, which will be coated with refractory concrete. As can be seen, due to the necessity to limit the loss of thickness in the opening feeding zone 2, its width is considerably narrow. In an example of embodiment of the invention for a lance of 250 mm outer diameter, the width of the opening of the mold is only 50 mm. On the other hand, in figure 3, which shows a top view of the feeding opening 12 of mold 14 for an injection lance 11 of the present invention, it is evident that the polygonal outer shape of mold 14 allows that the feeding opening 12 is placed fully occupying one side of the polygon. In an example of embodiment of the invention, where the injection lance 11 have an outer diameter of 250 mm the feeding opening 12 of the mold has a width of 150 mm, that is to say, three times the width of a lance opening equivalent to the prior art, according to figure 2. By the opening 12 of the mold 14, it can be easily visualized the inner pipe 13 with the docking elements 15 for fixing the mass of refractory concrete in inner pipe 13.

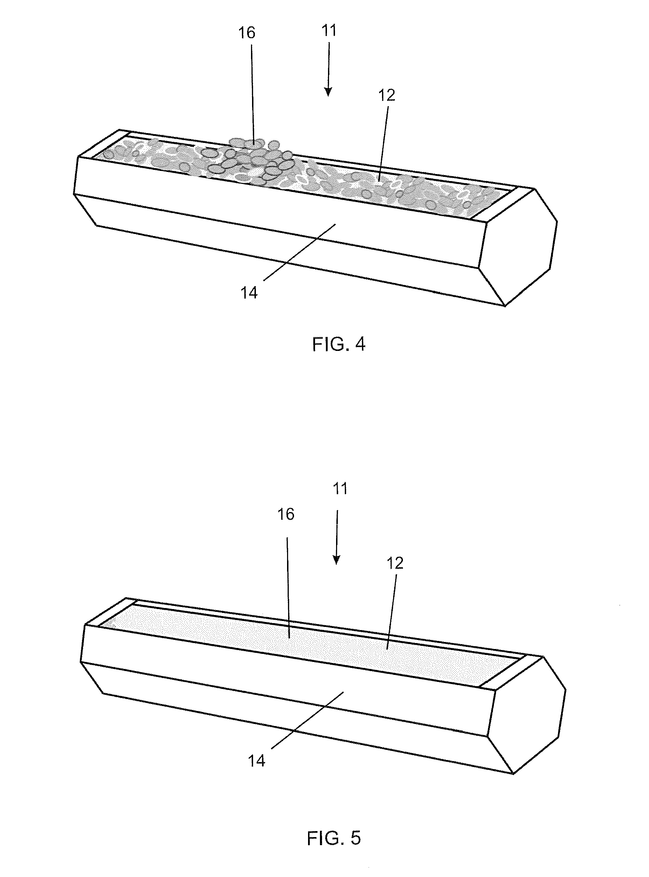

In figure 4, which is a top view of the section of the feed opening 12 of a mold 14 for an injection lance 11 of the present invention, can be easily verified that the texture of the mass of refractory concrete 16, in the moment of the feeding is such that necessarily requires a stage of vibration for its accommodation within the form 14. The total length of the mold 14 corresponds to total length coated with refractory concrete 16 of the injection lance 11.

The polygonal mold 14 and its respective injection lance 11 produced shows preferably an even number of sides to facilitate the support of mold 14 in a vibratory foundation.

The steps for the method of preparation of the injection lance 11 according to the present invention are:
1 - Preparation of the mold 14 and the correspondent assembly of the inner pipe 13 therein,
2 - Filling with refractory concrete 16 and applying vibration,
3 - Cure of the refractory concrete 16 within mold 14,
4 - Removal of mold 14 releasing the injection lance 11 already in its final shape, and
5 - Burning of injection lance 11 in appropriate oven.

In comparison with the necessary steps for the production of an injection lance of the prior art, in the present invention the filling of the mass of the refractory concrete 16 is carried out in a significantly shorter time, whereas the vibration of mold 14 is necessary only in the final phase of the filling due to the ease of access. In figure 5 is illustrated a view in top perspective of a feed section of mold 14 for an injection lance 11 of the present invention fully filled with refractory concrete 16 having, thus, followed the steps 1 and 2 mentioned above of the method of preparation.

It can be perceived that the external face of the refractory concrete used 16 completely fills the opening of filling 12 of mold 14.

In an example of embodiment of the invention of a lance with outer diameter of 250 mm and a length of the injection lance 11 of 2400 mm, according to the present invention, the weight of filler material is 300 Kg, the time of filling of 3 minutes and the vibration time of 2 minutes.

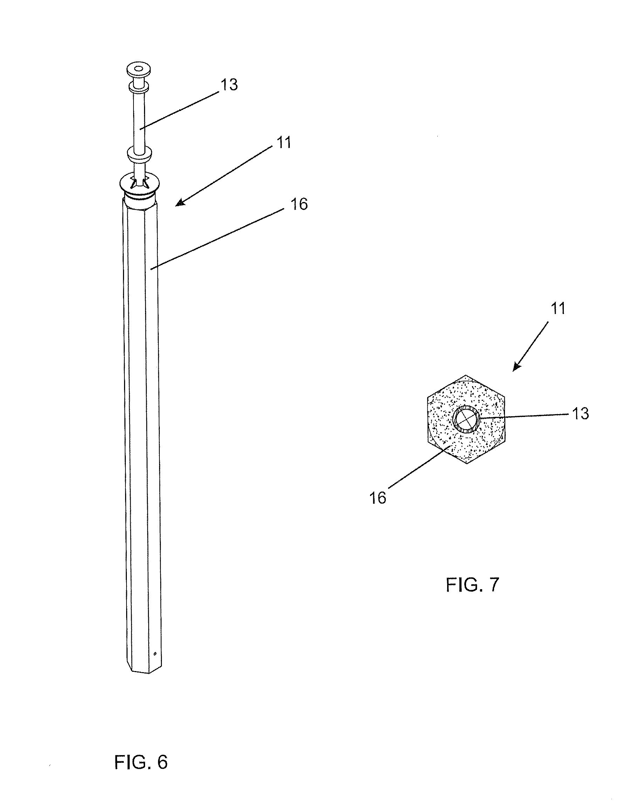

In Figure 6, which shows a perspective view of the injection lance 11 of the present invention, the outer faces of the polygon, which composes the surface of the refractory concrete mass 16 that can be observed. The extremity of inner pipe 13 can be also seen.

Other advantage of the injection lance 11 of the present invention is that the vertices of the polygon act as sacrifice material, since they tend to concentrate the tension and chip or break during use, reducing, then, the mechanical and thermomechanical stress in the cylindrical region within the radial polygonal profile.

At last, figure 7 shows cutaway section of an injection lance 11 of the present invention, where it can be seen the inner pipe 13 and the refractory concrete 16 with an external polygonal profile.

In the embodiment example of the present invention one hexagonal external profile for the refractory concrete 16 is submitted. It is evident for a person skilled in the art that the polygonal profile can have square shape, pentagonal, octogonal, decagonal, etc., besides the hexagonal shown, always according to the diameter of the injection lance and the best relation of face width to the opening feed 12.

Furthermore, the use of such outer profile of the refractory concrete 16 can occur in a determined zone of the injection lance 21 or throughout the whole length of the refractory concrete coating 16, as showed in the example of embodiment of the invention above. It is also clear that the outer polygonal profile of the refractory concrete coating 16 can be used in any type of lance for the use in metallurgical vessels.

Since it was described an example of preferred embodiment, it should be understood that the scope of the present invention encompasses other possible variations, being limited solely by the wording of the appended claims, including therein the possible equivalents.

## Claims

1. Lance for top injection in metallurgical vessels, which is used essentially for the refining process of pig iron and steel production, wherein the lance (11) has at least one inner tube (13) and a cover of refractory concrete (16), charactererized in that the external profile of the cover of refractory concrete (16) is polygonal.

2. Lance for top injection in metallurgical vessels according to claim 1, **characterized in that** the outer profile of the refractory concrete coating (16) is a polygon with an even number of sides.

3. Lance for Top injection in metallurgical vessels according to claim 2, **characterized in that** the outer profile of the refractory concrete coating (16) is a hexagon.

4. Lance for top injection in metallurgical vessels according to claim 1, **characterized in that** it is produced in a mold (14) of a polygonal shape.

5. Lance for top injection in metallurgical vessels according to claim 4, **characterized in that** the mold (14) presents a feed opening (12) placed on one side of the polygon.

6. Lance for top injection in metallurgical vessels according to claim 5, **characterized by** the feed opening (12) to fill completely the width of the outer face of the polygonal mold (14).

7. Method of production of an injection lance (11), as defined in any of claims 1 to 6, including the steps of:
- 1 - preparation of the mold (14) and the correspondent assem-bly of inner pipe 13 therein,
- 2 - filling with refractory concrete (16) and applying vibration,
- 3 - cure of the refractory concrete (16) within the mold (14),
- 4 - removal of the mold (14) releasing the injection lance (11) already in its final shape, and
- 5 - burning of the injection lance (11) in an oven, **characterized by** the vibration of the mold (14) to occur only in the end of the filling step.
